# EUROPEAN PATENT APPLICATION

(11) **EP 4 733 908 A1**
(43) Date of publication of application: **29.04.2026**
(21) Application number: 24830372.9
(22) Date of filing: 29.05.2024
(51) Int. Cl.: G06F 3/0481

(54) **CONTENT PRESENTATION METHOD AND APPARATUS, DEVICE, AND STORAGE MEDIUM**

(30) Priority: 26.06.2023 CN 202310762767
(71) Applicant: Beijing Zitiao Network Technology Co., Ltd., Beijing 100190 (CN)
(72) Inventor: LI, Ziwei, Beijing 100028 (CN); ZHONG, Jiaxin, Beijing 100028 (CN); LI, Peifeng, Beijing 100028 (CN); DUAN, Yunshan, Beijing 100028 (CN); WANG, Tingting, Beijing 100028 (CN); TANG, Yuxi, Beijing 100028 (CN); ZHANG, Yimeng, Beijing 100028 (CN); TANG, Bo, Beijing 100028 (CN)
(74) Representative: Isarpatent
(86) International application number: PCT/CN2024/096182
(87) International publication number: WO 2025/001725

(57) **Abstract**

According to the disclosure, a method, an apparatus, a device and a storage medium for content presenting are provided. An example method includes: presenting at least one interaction entry control in a content display page of a user, each interaction entry control corresponding to at least one type of interaction information page, the content display page being configured to at least display at least one of user information of the user and content posted by the user; and switching, in response to detecting a trigger operation on a first entry control of the at least one interaction entry control, from the content display page to an interaction information page corresponding to the first entry control.

## Description

This application claims priority to Chinese Patent Application No. 2023107627677, filed on June 26, 2023, entitled "METHOD, APPARATUS, DEVICE AND STORAGE MEDIUM FOR CONTENT PRESENTING", the entire content of which is incorporated herein by reference.

### FIELD

Example embodiments of the present disclosure generally relate to the field of computers, and in particular, to a method, an apparatus, a device and a storage medium for content presenting.

### BACKGROUND

Nowadays, more and more applications are designed to provide various services to users. For example, a user may browse and view various types of content in an application, including multimedia content such as videos, images, image sets, sounds, and the like. The user may also interact with other users in the application, for example, liking, favoriting, commenting, etc. of the content posted by other users, or following other users, visiting personal homepages of other users, and the like. These interactions may be reminded to the user in the form of a message. For different interactions, the application may provide different interaction information pages for the user to display the interaction messages.

### SUMMARY

In a first aspect of the present disclosure, a method for content presenting is provided. The method includes: presenting at least one interaction entry control in a content display page of a user, each interaction entry control corresponding to at least one type of interaction information page, the content display page being configured to at least display at least one of user information of the user and content posted by the user; and switching, in response to detecting a trigger operation on a first entry control of the at least one interaction entry control, from the content display page to an interaction information page corresponding to the first entry control.

In a second aspect of the present disclosure, an apparatus for content presenting is provided. The device includes: a control presenting module configured to present at least one interaction entry control in a content display page of a user, each interaction entry control corresponding to at least one type of interaction information page, the content display page being configured to at least display at least one of user information of the user and content posted by the user; and a page switching module configured to switch, in response to detecting a trigger operation on a first entry control of the at least one interaction entry control, from the content display page to an interaction information page corresponding to the first entry control.

In a third aspect of the present disclosure, an electronic device is provided. The device includes: at least one processing unit; and at least one memory coupled to the at least one processing unit and storing instructions for execution by the at least one processing unit. The instructions, when executed by the at least one processing unit, causes the device to perform the method of the first aspect.

In a fourth aspect of the present disclosure, a computer-readable storage medium is provided. The medium stores thereon a computer program, and the computer program, when executed by a processor, implements the method of first aspect.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure may be implemented;
FIG. 2 illustrates a schematic diagram of an example of a content display page;
FIGS. 3A to 3C respectively illustrate schematic diagrams of examples of content display pages according to some embodiments of the present disclosure;
FIGS. 4A to 4E respectively illustrate schematic diagrams of examples of different interaction information pages according to some embodiments of the present disclosure;
FIGS. 5A to 5D respectively illustrate schematic diagrams of examples of a first page with different forms of unread message reminders according to some embodiments of the present disclosure;
FIGS. 5E to 5F respectively illustrate schematic diagrams of examples of content display pages with different unread message reminders according to some embodiments of the present disclosure;
FIG. 6 illustrates a flowchart of a process for content presenting according to some embodiments of the present disclosure;
FIG. 7 illustrates a block diagram of an apparatus for content presenting according to some embodiments of the present disclosure; and
FIG. 8 illustrates an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the term "include" and its variants should be understood as open inclusion, i.e., "include, but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

It may be understood that the data involved in the technical solution (including but not limited to the data itself, the obtaining or using of the data) should follow the requirements of the corresponding laws and regulations and related provisions.

It can be understood that before using the technical solutions disclosed in the embodiments of the present disclosure, the user should be informed of the types, use ranges, usage scenarios, and the like of the user information related to the present disclosure in an appropriate manner according to relevant laws and regulations, and the authorization of the user should be obtained.

For example, in response to receiving an active request of a user, prompt information is sent to the user to explicitly prompt the user that the operation requested to be performed will need to obtain and use the information of the user, so that the user can autonomously select whether to provide the user information to software or hardware such as an electronic device, an application program, a server or a storage medium executing the operation of the technical solution of the present disclosure according to the prompt information.

As an optional but non-limiting implementation, in response to receiving an active request of a user, a manner of sending prompt information to the user may be, for example, a pop-up window, and prompt information may be presented in a text manner in the pop-up window. In addition, the pop-up window may further carry a selection control for the user to select "agree" or "disagree" to provide the user information to the electronic device.

It may be understood that the foregoing notification and obtaining a user authorization process are merely illustrative, and do not constitute a limitation on implementations of the present disclosure, and other manners of meeting related laws and regulations may also be applied to implementations of the present disclosure.

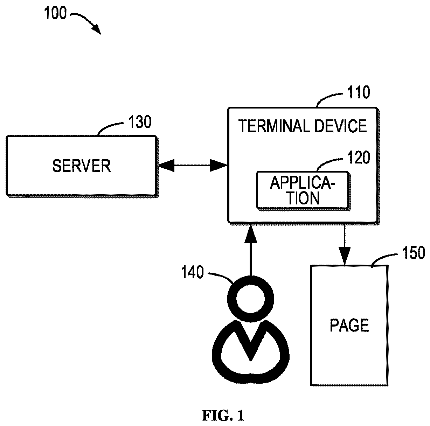

FIG. 1 illustrates a schematic diagram of an example environment 100 in which embodiments of the present disclosure may be implemented. In this example environment 100, an application 120 is installed in a terminal device 110. The user 140 may interact with the application 120 via the terminal device 110 and / or an attachment device of the terminal device 110. The application 120 may be a content sharing application capable of providing various services related to the media content item to the user 140, including browsing, commenting, forwarding, creating (e.g., shooting and/or editing), posting, etc. of the content. As used herein, a "media content item" includes one or more types of content, such as video, images, animated images, image sets, audio, text, and the like.

In the environment 100 of FIG. 1, the terminal device 110 may present a page 150 of the application 120 if the application 120 is active. The page 150 may include various pages that the application 120 can provide, such as a content presentation page, a content creating page, a content posting page, a message page, a personal homepage, or the like. The application 120 may provide a content browsing function to browse various types of content posted in the application 120. The application 120 may also provide content creating function, including shooting, uploading, editing, and/or posting media content items. The application 120 may also provide an interaction function, including interacting with other users (for example, adding a friend) and interacting with various types of content (including liking, favoriting, commenting, etc. of the content).

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

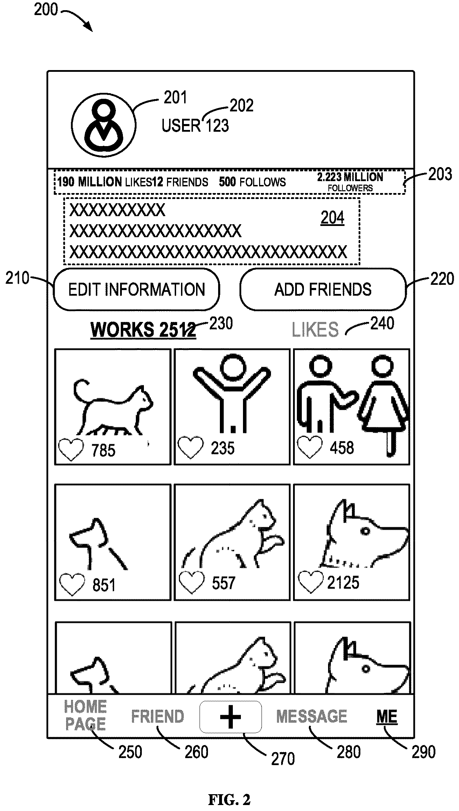

Generally, information and content associated with the user are displayed in a specific content display page of the application 120, for example, a personal homepage, including user information of the user, content posted by the user, content favorited by the user, content liked by the user, and the like. FIG. 2 illustrates a schematic diagram of an example of a content display page.

As shown in FIG. 2, the content display page 200 is presented with the user information of the user (including an avatar 201 of the user, a name 202 of the user, an information bar 203, and a personal profile 204 of the user). In some embodiments, the content display page 200 is also presented with an editing control 210 for editing user information of the user. The terminal device 110 may present an editing entry or an editing page for editing the user information of the user in response to receiving a trigger operation on the editing control 210, and correspondingly modify the user information of the user in response to an input of the user.

In some embodiments, the content display page 200 also is presented with an entry control 220 associated with a page of adding friends. The terminal device 110 may switch to present the page of adding friends in response to receiving a trigger operation on the entry control 220.

In some embodiments, the content display page 200 may also display content posted by a user, content favorited by a user, content liked by a user, and the like. As shown in FIG. 2, the content display page 200 may present a switching control 230 and a switching control 240 for switching the displayed content. The terminal device 110 may display, in response to receiving a trigger operation for the switching control 230 or the switching control 240, content posted by a user corresponding to the switching control 230, or content liked and/or favorited by a user corresponding to the switching control 240.

In some embodiments, the content display page 200 may also present page entry controls associated with different pages, which may also be referred to as labels, navigation labels, Tabs, etc. of these pages. The area presenting such a page entry control may be referred to as a navigation bar. As shown in FIG. 2, the content display page 200 may also present a page entry control 250, a page entry control 260, a page entry control 270, a page entry control 280, and a page entry control 290.

The terminal device 110 may switch to present a content browsing page for displaying multimedia content in response to receiving a trigger operation on the page entry control 250. The terminal device 110 may switch to present a friend post page for displaying what the friend is posted in response to receiving a trigger operation on the page entry control 260. The terminal device 110 may switch to present a content creation page for creating the multimedia content in response to receiving a trigger operation on the page entry control 270. The terminal device 110 may switch to present a message page for presenting interaction information and a session information in response to receiving a trigger operation on the page entry control 280. When the terminal device 110 presents other pages other than the content display page 200, the terminal device 110 may switch to present the content display page 200 in response to receiving a trigger operation on the page entry control 290. Although the content display page 300 is presented with the page entry control 280 associated with the message page, the page entry control occupies a position of the navigation bar, so that an association degree between the content display page 200 and the message page corresponding to the page entry control 280 is relatively low. Moreover, if the user expects to view the unread message, in response to the trigger operation on the page entry control 280 for switching to the message page, this may require exiting the content display page 200 and jumping to the message page, which may give the users a feeling of leaving their personal page, and affect their expectations for viewing the unread message.

In order to improve the user's expectation for viewing the unread message, in an embodiment of the present disclosure, it is proposed that an entry and/or a control associated with viewing the interaction information is provided directly on the content display page. According to an embodiment of the present disclosure, an improved solution for content presentation is proposed. In this solution, at least one interaction entry control is presented in a content display page, and each interaction entry control corresponds to at least one type of interaction information page. If a trigger operation on a certain interaction entry control of the at least one interaction entry control is detected, the content display page is switched to an interaction information page corresponding to the interaction entry control. By integrating the entry of the interaction information related to the user into the content display page of the user, the content display page not only presents the user's own work and personal information but also integrates social interaction information of the user. In this way, the complexity of the user jumping between different pages can be reduced, the interaction information can be conveniently checked, the viewing efficiency and frequency of the interaction information can be improved, and a better content browsing experience can be obtained.

Some example embodiments of the present disclosure will be described below with continued reference to the accompanying drawings.

In an embodiment of the present disclosure, the terminal device 110 presents at least one interaction entry control in a content display page of the user, each interaction entry control corresponding to at least one type of interaction information page, and the content display page is configured to at least display at least one of user information of the user and content posted by the user. In some embodiments, a presentation position, a presentation size, and a presentation color of each interaction entry control of the at least one interaction entry control in the content display interface, and a relative position between different interaction entry controls in the at least one interaction entry control may be preset. Specifically, it may be preset and input by the user to the terminal device 110, or may be determined by the terminal device 110 itself based on historical data of the user. In some examples, the one or more interaction entry controls may be single entry control(s) for accessing a single type of interaction information page. In some examples, the one or more interaction entry controls may also be dual-entry control(s) or multi-entry control(s) for accessing two or more types of interaction information pages.

In some embodiments, the number and specific types of interaction entry controls presented in the content display page may be determined based on the type of the user account, the configuration of the user, and the like. In this way, personalized display for the interaction entry control can be realized.

The terminal device 110 may further switch from the content display page to a default interaction information page of the plurality of interaction information pages in response to detecting a trigger operation on a certain interaction entry control. The default interaction information page herein may be predetermined by the user, may be preconfigured by an operator of the application 120, or may be determined based on historical data of the user.

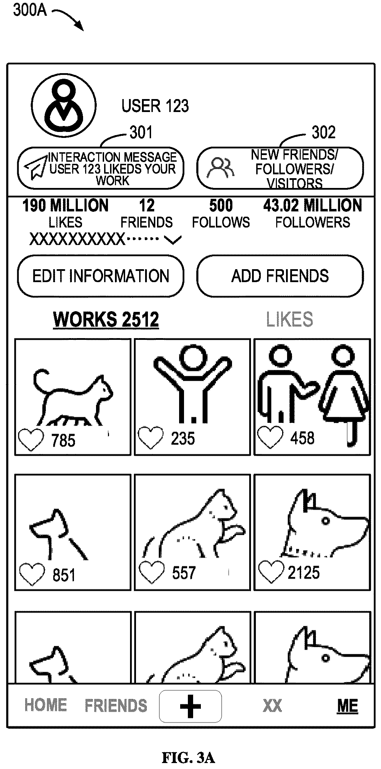

FIGS. 3A to 3C respectively illustrate schematic diagrams of examples of content display pages according to some embodiments of the present disclosure. It should be understood that the pages in FIGS. 3A to 3C and the pages in other figures that will be described below are merely example pages, and various page designs may actually exist. Graphical elements in a page may have different arrangements and different visual representations, one or more elements of which may be omitted or replaced, and one or more other elements may also exist. Embodiments of the present disclosure are not limited in this respect.

As shown in FIG. 3A, the content display page 300A is presented with two interaction entry controls, i.e., an entry control 301 and an entry control 302. The two interaction entry controls may respectively correspond to different interaction information pages of the at least one type of interaction information pages. For example, the entry control 301 may correspond to at least one interaction message page for presenting at least one type of interaction message for a work related to the user (e.g., liking, favoriting, commenting, etc. of the work), and the entry control 302 may correspond to at least one user interaction page for presenting at least one type of interaction state (e.g., new friends added, new followers, new visitors, etc.) for other users related to the user.

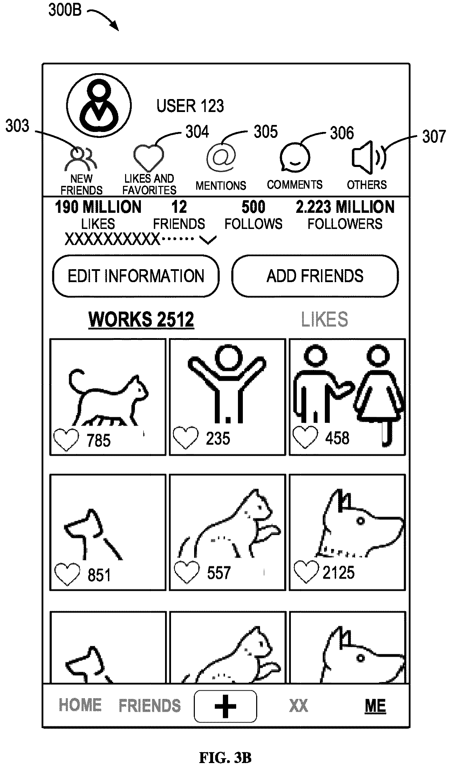

As shown in FIG. 3B, the content display page 300B is presented with five interaction entry controls, i.e., entry controls 303, 304, 305, 306, and 307. The entry control 303 herein is similar to the entry control 302, and may correspond to at least one user interaction page for presenting at least one type of interaction state for other users related to the user. The entry control 304, the entry control 305, and the entry control 306 may correspond to at least one interaction message page for presenting at least one type of interaction message for a work related to the user, respectively. The entry control 304, the entry control 305, and the entry control 306 may be understood as controls that respectively correspond to different interaction message pages corresponding to the entry control 301 in FIG. 3A, that is, the three controls may be understood as refinements to the entry control 301. For example, the entry control 301 in FIG. 3A may correspond to three interaction message pages, i.e., a likes and favorites page, a mention page, and a comment page, while the entry control 304 in FIG. 3B may correspond to the likes and favorites page, the entry control 305 may correspond to the mention page, and the entry control 306 may correspond to the comment page. The entry control 307 may correspond to an interaction information page for presenting interaction messages for other contents other than those related to a work and/or other users, such as application update information, page setting information, goods purchase information, and the like.

In this way, a content display page (for example, a content display page 300A of FIG. 3A or a content display page 300B of FIG. 3B) including different interaction entry controls may be presented to different users, so that the presented content display page is more consistent with a user requirement.

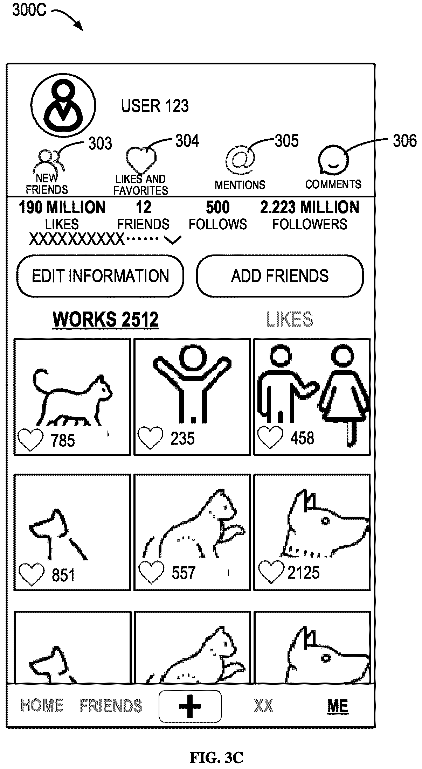

It should be understood that any of FIG. 3A and FIG. 3B may also be used for various types of users. In addition to FIG. 3A and FIG. 3B, other layout mode of interaction entry controls may be provided. FIG. 3C illustrates another example layout mode. As shown in FIG. 3C, four interaction entry controls, i.e., an entry control 303, an entry control 304, an entry control 305, and an entry control 306, are presented in the content display page 300C. The at least one interaction information page corresponding to the four controls in FIG. 3C are the same as the at least one interaction information page corresponding to the corresponding four controls in FIG. 3B, and details are not described herein again. The layout mode of the entry control in the content display page 300C shown in FIG. 3C may be configured for a specific type of user, or may be configured for multiple types of users, which are not specifically limited herein.

It may be understood that the foregoing different content display pages are merely illustrative, and do not imply a limitation on at least one interaction entry control in the content display page (including a specific interaction entry control and a number, a location, a size, and the like of the at least one interaction entry control) and a limitation on a content display page presented for the user (for example, a content display page as shown in FIG. 3B may be presented for different types of users).

The above describes an arrangement of interaction entry controls in a content display page and an interaction information page accessible via respective entry controls. When the content display page and the interaction entry control therein are presented, the terminal device 110 may switch from the content display page to the interaction information page corresponding to the interaction entry control in response to detecting a trigger operation on any one of the at least one interaction entry control.

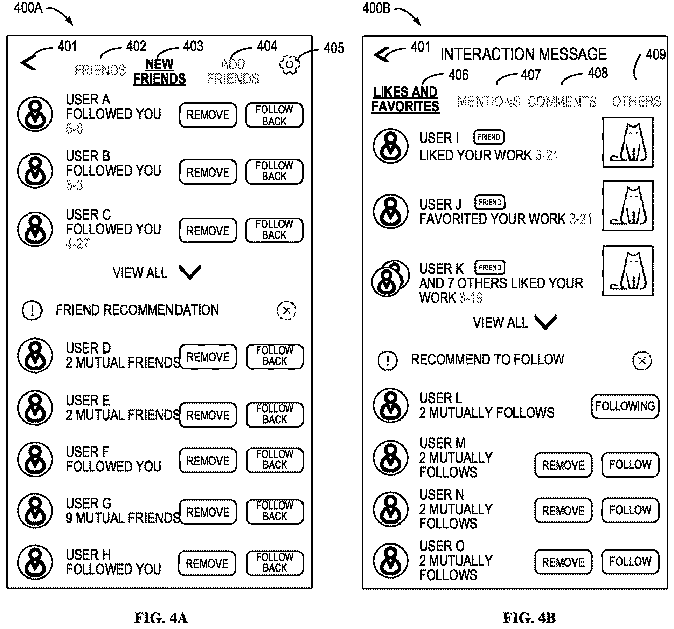

The interaction information page is used for presenting interaction information of a corresponding type. The interaction information page herein may include at least one interaction message page for presenting at least one type of interaction message for a work related to the user. For example, the interaction information page may include a likes and favorites page, a comment page, a mention page, and the like, and these are all pages used to present an interaction message related to a work of the current user or a work of another user interacting with the current user. Alternatively or additionally, the interaction information page may include a user interaction page for presenting at least one type of interaction state for other users related to the user. For example, the user interaction page may include a friend page that presents friend information (friends may be, for example, users that mutually follow each other), a new friend page that presents follower information (followers may, for example, refer to users that unidirectionally follow the user), a visitor page that presents visitor information (visitors may be, for example, users viewing the user's content display page), and/or the like. The trigger operation for triggering the interaction entry may be in various types, including but not limited to a click operation, a long-press operation, a double-click operation, a sliding operation, and the like. FIGS. 4A to 4E respectively illustrate schematic diagrams of examples of different interaction information pages according to some embodiments of the present disclosure.

In some embodiments, if a certain interaction entry control may correspond to a plurality of interaction information pages, a trigger on the interaction entry control may trigger presentation of a default interaction information page of a plurality of interaction information pages. For example, the terminal device 110 may determine that the corresponding default interaction information page is an interaction information page 400A shown in FIG. 4A in response to detecting a trigger operation on the entry control 302 or the entry control 303 in FIG. 3A. As shown in FIG. 4A, the interaction information page 400A is presented with information about followers newly added (for example, "User A has followed you") and an interaction button (including a "remove" button and a "follow back" button). The terminal device 110 may execute corresponding interaction content in response to detecting a trigger operation on a certain interaction button. For example, the users may follow back another user that has followed them in response to detecting a trigger operation on the "follow back" button. In some embodiments, to facilitate user interaction, the interaction information page 400A is also presented with friend recommendation information. The friend recommendation information may be presented as other users recommended by the current user. It may be understood that other interaction information pages may be presented with an interaction button and friend recommendation information.

In some embodiments, when the interaction information page 400A is presented, the terminal device 110 may further present page entry controls respectively corresponding to the plurality of interaction information pages. As shown in FIG. 4A, the terminal device 110 further presents a page entry control 402, a page entry control 403, and a page entry control 404. The terminal device 110 may switch, in response to receiving a trigger operation on any page entry control of the three page entry controls, from the interaction information page 400A to a interaction information page corresponding to the page entry control. For example, the terminal device 110 may switch to present a friend added page in response to receiving a trigger operation on the page entry control 404. In some embodiments, the terminal device 110 may highlight a page entry control corresponding to an interaction information page currently being presented, for example, perform operations such as highlighting, bolding, underlining, and the like on a name, identification, etc. of the page entry control.

In some embodiments, these page entry controls may also be referred to as tags, navigation tags, Tabs, etc. of these pages. The plurality of page entry controls may also be other page entry controls, and the plurality of page entry controls may be located at any locations of the page.

In some embodiments, the terminal device 110 may also present a return control 401 and a setting control 405 while presenting the interaction information page 400A. The terminal device 110 may return the content display page in response to receiving a trigger operation on the return control 401. The terminal device 110 may present a setting page in response to receiving a trigger operation on the setting control 405. The setting page may be used to set, for example, a default interaction information page of the plurality of interaction information pages, names of page entry controls respectively corresponding to the plurality of interaction information pages, and the like.

In some embodiments, the terminal device 110 may determine, in response to detecting a trigger operation on the entry control 301, its corresponding default interaction information page and present the default interaction information page. For example, when it is determined that the default interaction information page corresponding to the entry control 301 is an interaction information page 400B shown in FIG. 4B, the interaction information page 400B shown in FIG. 4B is presented.

In some embodiments, the terminal device 110 may present the interaction information page 400B shown in FIG. 4B in response to detecting a trigger operation on the entry control 304. As shown in FIG. 4B, the interaction information page 400B is presented with a liked message and a favorited message from other users for a work related to the user (for example, a message "User I liked your work").

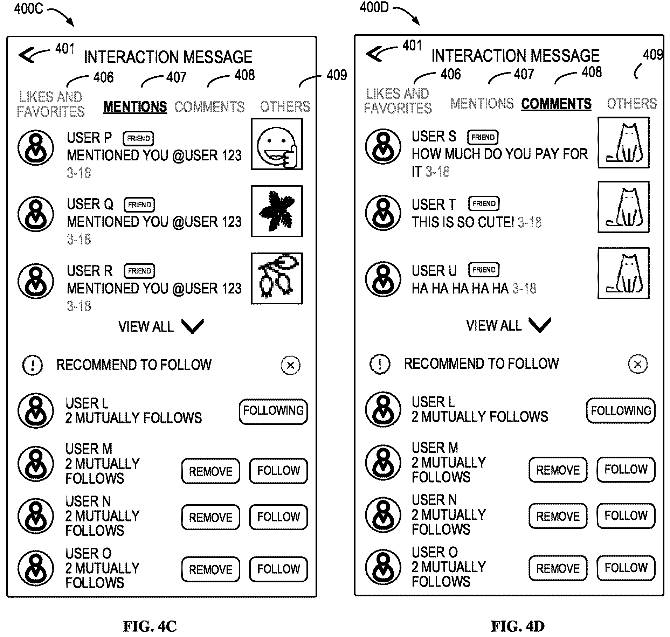

In some embodiments, the terminal device 110 may present an interaction information page 400C shown in FIG. 4C in response to detecting a trigger operation on the entry control 305. As shown in FIG. 4C, the interaction information page 400C is presented with a mention message from other users for the user (e.g., "User P mentioned you @User123").

In some embodiments, the terminal device 110 may present an interaction information page 400D shown in FIG. 4D in response to detecting a trigger operation on the entry control 306. As shown in FIG. 4D, the interaction information page 400D is presented with a comment message from other user for a work related to the user (for example, "User S comments: how much do you pay for it"). It should be noted that the work related to the user herein may be a work posted by the user, a work commented by the user, a comment posted by the user, or the like.

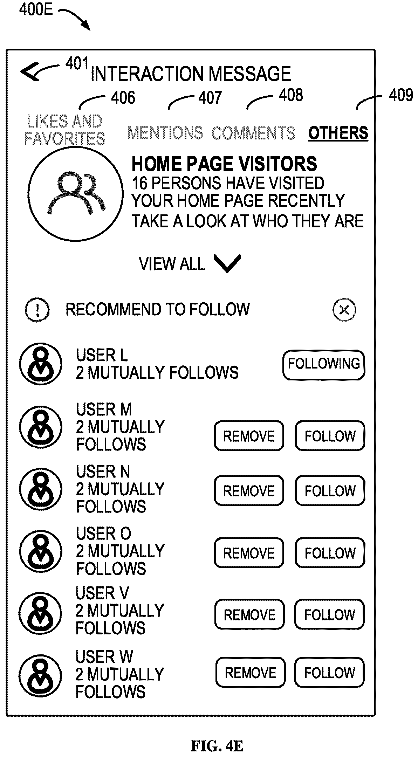

In some embodiments, the terminal device 110 may present an interaction information page 400E shown in FIG. 4E in response to detecting a trigger operation on the entry control 307. As shown in FIG. 4E, the interaction information page 400E is presented with other interaction information between other users and the user (for example, visiting information of other users to the personal homepage of the user).

Similar to the interaction information page 400A, in some embodiments, when any one of the interaction information pages 400B, 400C, 400D, 400E is presented, the terminal device 110 may further present page entry controls (for example, a page entry control 406, a page entry control 407, a page entry control 408, and a page entry control 409) respectively corresponding to the plurality of interaction information pages. The terminal device 110 may switch to present the interaction information page corresponding to the page entry control in response to receiving a trigger operation on any page entry control of the four page entry controls. For example, the terminal device 110 may switch to present the interaction information page 400E in response to receiving a trigger operation on the page entry control 409. In some embodiments, the terminal device 110 may highlight the page entry control corresponding to the interaction information page currently being presented, for example, perform operations such as highlighting, bolding, underlining, and the like on a name, identification, etc. of the page entry control.

In this way, at least one interaction entry control associated with the interaction information page may be presented in the personal homepage of the user, and the user may trigger different interaction entry controls based on the user's own needs to switch to different interaction information pages to view the corresponding interaction information, which helps to improve the efficiency of viewing the interaction information by the user.

Related content for presenting interaction entry controls on a content display page is described above. In some embodiments, if it is determined that there is an unread message in the interaction information page corresponding to the at least one entry control, the terminal device 110 presents the unread message reminder in association with the target page entry control corresponding to the content display page. An example embodiment of presenting an unread message reminder when there is an unread message in the interaction information page corresponding to the interaction entry control is described below with continued reference to the accompanying drawings.

In some embodiments, if the page currently presented by the terminal device 110 is a page (referred to as a first page for ease of description) other than the content display page, when it is determined that there is an unread message in the interaction information page corresponding to the at least one entry control, the terminal device 110 may present the unread message reminder while presenting the first page. The first page herein may include, for example, a content browsing page, a friend post content page, and the like.

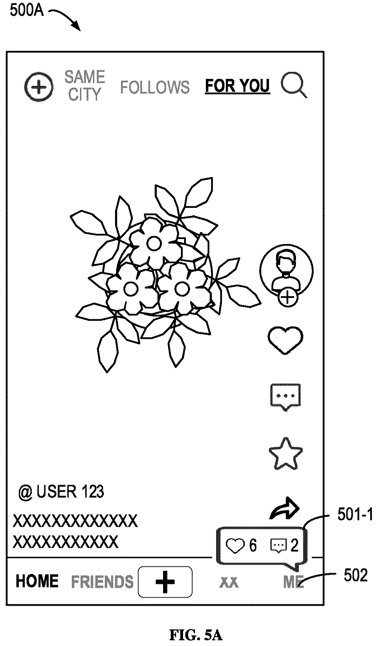

Specifically, the terminal device 110 may present, in the first page, a target page entry control corresponding to the content display page. When it is determined that there is an unread message in the interaction information page, the terminal device 110 may present the unread message reminder in association with the target page entry control. FIGS. 5A to 5D respectively illustrate schematic diagrams of examples of first pages with different forms of unread message reminders according to some embodiments of the present disclosure. As shown in FIG. 5A, when the first page 500A is a content browsing page, if it is determined that there is an unread message in the interaction information page corresponding to the at least one entry control in the content display page, the terminal device 110 may present an unread message reminder 501-1 in association with a target page entry control 502 corresponding to the content display page.

In some embodiments, to better prompt the user that there is an unread message, that is, to enhance the reminding effect of the unread message reminder, the terminal device 110 may present the unread message reminder in a more significant and prominent first style. For example, the first style of unread message reminder may occupy a larger display area, have a more prominent appearance or reminder mode (e.g., a vibration prompt, a voice prompt, etc.), and the like, as compared to other styles of unread message reminders. In some examples, the first style may include a bubble style or a pop-up style.

In some embodiments, in order to avoid affecting the content browsing of the user due to presentation of the unread message reminder in the first style for a long time and frequently, the terminal device 110 may present the unread message reminder in a more prominent first style only if the first predetermined condition is satisfied. The predetermined condition herein may be set by the users themselves, or may be preset by a background staff of the application 120. The application 120 may also be referred to as a target application.

In some embodiments, the first predetermined condition may include the target application corresponding to the content display page being started at least once within a first time period. That is, when the target application is started at least once within the first time period, the unread message reminder is presented in the first style. The first time period herein may be set by the users themselves, or may be preset by the background staff of the application 120, or may be determined by the terminal device 110 itself based on historical data. The first time period herein may be, for example, 1 hour, 5 hours, 10 hours, 1 day, or the like. Taking the first time period as 1 day as an example, the first predetermined condition indicates that the unread message reminder may be presented in the first style only when the target application is started for the second or subsequent times on the same day. In this case, for the user who starts the target application for the first time to view the unread message, the unread message reminder may no longer be presented in the first style, which can reduce the disturbance caused by presenting bubbles to such a user, and help to improve the content browsing experience of the user.

In some embodiments, the first predetermined condition may further include the unread message including an unread message in at least one predetermined type of interaction page. That is, when the unread message includes the unread message in the at least one predetermined type of interaction page, the unread message reminder is presented in the first style. The at least one predetermined type herein may be set by the users themselves, or may be preset by the background staff of the application 120, or may be determined by the terminal device 110 itself based on historical data of the user. The at least one predetermined type herein may include, for example, an interaction message (for example, a like message, a favorite message, a comment message, a mention message, etc.), an addition message of a new friend, a follow message of a new follower, and the like. It may be understood that even if there is an unread message in another type of interaction page other than the at least one predetermined type, the terminal device 110 does not present the unread message reminder corresponding to the unread message in the first style.

In some embodiments, in a case that the unread message reminder is presented in the first style, the terminal device 110 may present a respective type identifier of the at least one predetermined type and a number of unread messages in each predetermined type of interaction page. The respective type identifier of the at least one predetermined type herein may be, for example, a name, an icon, a number, or the like. As shown in FIG. 5A, the unread message reminder 501-1 is presented in a bubble style in the first page 500A, the bubble is associated with the target page entry control 502. The bubble is presented with a respective type identifier of the like type and the comment type and a number of unread messages in the type of the interaction page (the number of unread messages corresponding to the like type is 6, and the number of unread messages corresponding to the comment type is 2). In some embodiments, in addition to presenting the unread message reminder in the icon and number shown in FIG. 5A, the unread message reminder presented in the bubble style may further include a text, for example, may include text content such as "6 new likes and 2 new comments".

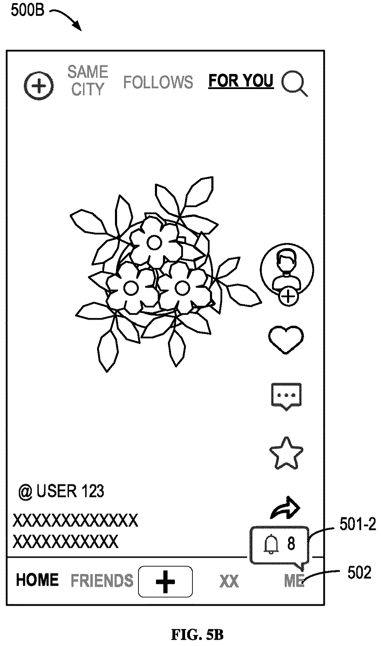

In some embodiments, the unread message reminder presented by the terminal device 110 in the first style may further include a predetermined interaction identifier and a total number of unread messages in the at least one predetermined type of interaction page. As shown in FIG. 5B, the unread message reminder 501-2 is presented in a bubble style in the first page 500B. The bubble is presented with a predetermined interaction identifier and a total number of unread messages in at least one predetermined type of interaction page (the total number of unread messages in at least one predetermined type of interaction page is 8). In some embodiments, similar to FIG. 5A, the bubbles presented by the terminal device 110 may further include a text, for example, may include "8 new interaction messages".

In some embodiments, a first predetermined condition may further include no access request of the user for the content display page being received within a second time period after the unread message reminder is presented in the second style. The second time period herein may also be set by the users themselves, or may be preset by the background staff of the application 120, or may be determined by the terminal device 110 itself based on historical data. The first time period may be, for example, 1 hour, 5 hours, 1 day, 2 days, or the like.

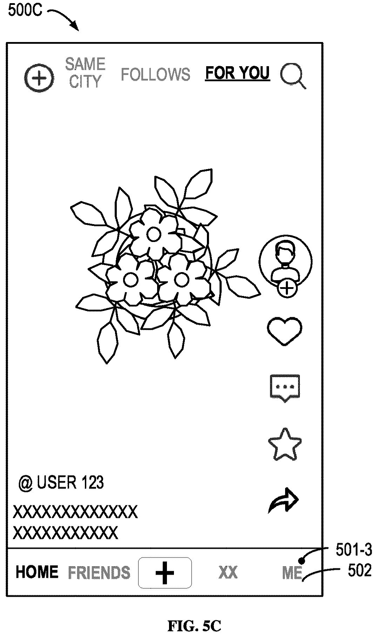

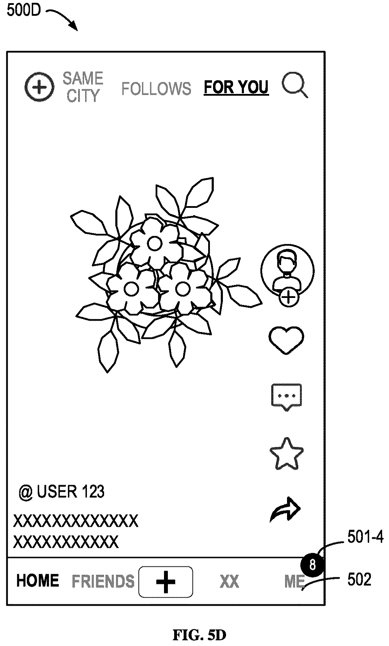

The second style is a different style from the first style. The second style is simpler compared to the first style with more significant reminder purposes. The second style may include, for example, a red dot reminder style. As shown in FIG. 5C, the unread message reminder 501-3 is presented in a red dot reminder style in the first page 500C. The second style may also include, for example, a style of a red dot reminder and a number of unread messages (which may also be referred to as a digital red dot style). The number of unread messages herein may include a total number of unread messages in at least one predetermined type of interaction page. As shown in FIG. 5D, the unread message reminder is presented in a digital red dot style in the first page 500D, and the number of the digital red dots is the total number of unread messages in at least one predetermined type of interaction page. In some embodiments, the number of unread messages may also be the total number of unread messages in the interaction information page corresponding to the at least one entry control, that is, the unread message corresponding to the number of unread messages includes an unread message in a predetermined type of interaction page and an unread message in a non-predetermined type of interaction page.

The second time period may be another time period different from the first time period (for example, the first time period is 1 day, and the second time period is 2 days), or may be a time period that is the same as the first time period (for example, each of the second time period and the first time period is 1 day). Taking the second time period being 2 days as an example, the first predetermined condition indicates switching to present the unread message reminder in the first style if the access request of the user for the content display page is received within 2 days after the unread message reminder is presented in the second style.

Some examples of a first predetermined condition that needs to be satisfied to trigger the presentation of an unread message reminder in a first style are discussed above. In some embodiments, the unread message reminder is presented in the first style (e.g., a bubble style) only when a plurality of first predetermined conditions are simultaneously satisfied. In some embodiments, the unread message reminder may be presented in a first style (e.g., a bubble style) when any of the first predetermined conditions is satisfied. Of course, in addition to the first predetermined condition described above, other first predetermined conditions for triggering the first style may be set as required, which is not limited in the present disclosure. In some embodiments, the terminal device 110 may present the unread message reminder in the first style in response to the at least one first predetermined condition described above being satisfied.

In some embodiments, in order to avoid affecting the content browsing experience of the user due to presentation of the unread message reminder in a more significant first style for a long time, the terminal device 110 may further switch the presentation style of the unread message reminder from the first style to another style when a second predetermined condition is satisfied. The second predetermined condition may include, but is not limited to, a duration of presenting the unread message reminder in the first style reaching a predetermined duration. That is, in some embodiments, the terminal device 110 may switch the presentation style of the unread message reminder from the first style to a third style in response to the duration of presenting the unread message reminder in the first style reaching the predetermined duration. The third style herein is a different style from the first style. In some embodiments, the third style may be a red dot reminder or a red dot digital reminder. The third style may be the same as or different from the second style. The predetermined duration may be, for example, 5 seconds, 10 seconds, 30 seconds, 1 minute, or the like. For example, the terminal device 110 may switch to present the unread message reminder 501-3 in the red dot reminder style shown in FIG. 5C in response to presenting the unread message reminder 501-1 in the bubble style shown in FIG. 5A for 30 seconds.

In some embodiments, after the terminal device 110 switches the unread message reminder from the first style to the third style, the terminal device 110 may further switch the style of the unread message reminder to be presented in another style in response to the duration of presenting the unread message reminder in the third style reaching a predetermined duration and no new interaction message appearing. For example, the terminal device 110 may switch to present the unread message reminder in the red dot reminder style in response to the duration of presenting the unread message reminder in the bubble style for 30 seconds. The terminal device 110 further switches to present the unread message reminder in the digital red dot style in response to the duration of presenting the unread message reminder in the red dot reminder style reaching the predetermined duration and the no new interaction message appearing.

In some embodiments, in order to avoid affecting the content browsing experience of the user due to presentation of the unread message reminder in a more significant first style frequently, the terminal device 110 may not present the unread message reminder in the first style and directly present the unread message reminder in another style in a case that the third predetermined condition is satisfied. The third predetermined condition may include, for example, a number of times of presenting the unread message reminder in the first style within a third time period reaching a predetermined number of times. The predetermined number of times may be preset by the users themselves, may be preset by the background staff of the application 120, or may be determined by the terminal device 110 itself based on historical data. The predetermined number of times may be, for example, 1 time, 2 times, 3 times, or the like. That is, in some embodiments, the terminal device 110 may directly present the unread message reminder in a fourth style in response to the number of times of presenting the unread message reminder in the first style within the third time period reaching a predetermined number of times. The fourth style herein is a different style from the first style. In some embodiments, the fourth style may be a red dot reminder or a red dot digital reminder. The fourth style may be the same as or different from the second style or the third style. The third time period may be, for example, 1 hour, 5 hours, 10 hours, 1 day, etc. For example, the terminal device 110 may directly present the unread message reminder 501-4 in the digital red dot style shown in FIG. 5D in response to the unread message reminder 501-1 being presented in the bubble style shown in FIG. 5A within 1 day.

In some embodiments, when the page currently presented by the terminal device 110 is the first page and the unread message reminder is presented in the first page, the terminal device 110 may switch from the first page to the content display page in response to receiving a trigger operation on the target page entry control or the unread message reminder. For example, taking the page currently presented by the terminal device 110 as the first page 500A, the terminal device 110 may switch from the first page 500A to the content display page in response to receiving a trigger operation on the target page entry control 502 or the unread message prompt 501-1. In some embodiments, in response to switching from the first page 500A to present the content display page, the terminal device 110 ceases presenting the unread message reminder 501-1 in the first style.

In some embodiments, after the unread message reminder is presented, in response to the content display page being presented, the terminal device 110 may present at least one unread message reminder in association with the at least one second entry control, and an unread message exists in the interaction information page corresponding to the at least one second entry control respectively. The second entry control herein may include an interaction entry control corresponding to a predetermined type of interaction page, or may include an interaction entry control corresponding to a non-predetermined type of interaction page. In some embodiments, when the content display page is presented, the terminal device 110 may continue to present the unread message reminder in association with the target page entry control corresponding to the content display page in response to the unread message still existing. The presentation style of the unread message reminder herein may be another style other than the first style, for example, may be a digital red dot style.

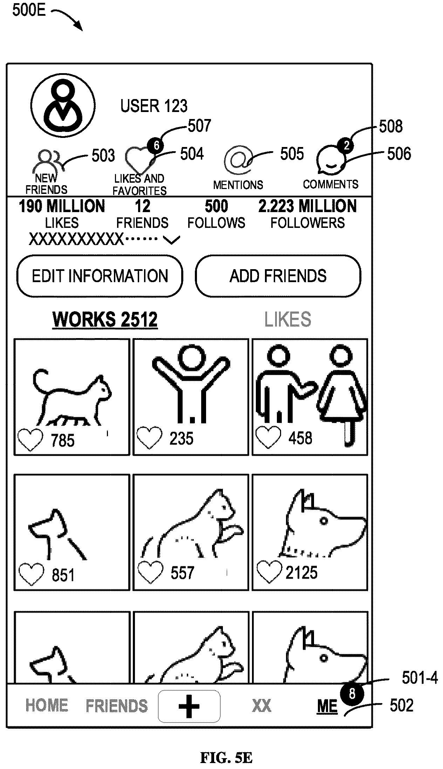

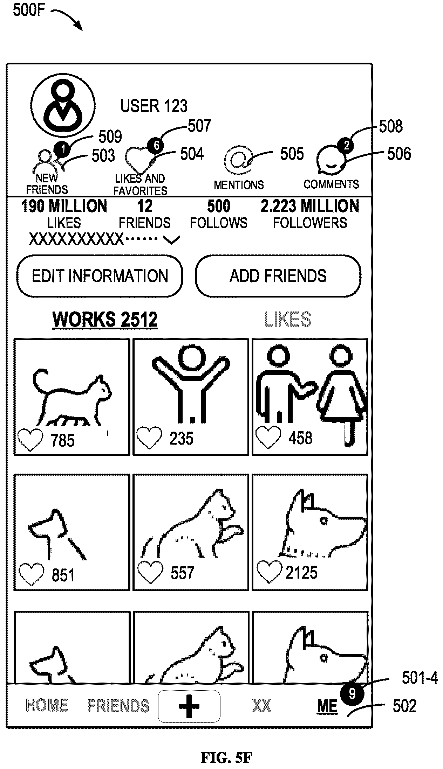

The terminal device 110 switches to the presented content display page, as shown in FIGS. 5E and 5F. FIGS. 5E and 5F respectively illustrate schematic diagrams of examples of content display pages with different unread message reminders according to some embodiments of the present disclosure. As shown in FIG. 5E, the terminal device 110 presents a plurality of interaction entry controls in the content display page 500E, including interaction entry controls 503, 504, 505, and 506. If the terminal device 110 only presents the interaction message reminder in association with the interaction entry control corresponding to the predetermined type of interaction page, the terminal device 110 may present, in response to the interaction entry control 504 and the interaction entry control 506 being interaction entry controls corresponding to the predetermined type of interaction page, an unread message reminder 507 and an unread message reminder 508 in association with the interaction entry control 504 and the interaction entry control 506.

As shown in FIG. 5F, the terminal device 110 presents a plurality of interaction entry controls in the content display page 500F, including the interaction entry controls 503, 504, 505, and 506. If the terminal device 110 may present the interaction message reminder in association with the interaction entry control corresponding to the predetermined type of the interaction page and the interaction entry control corresponding to the non-predetermined type of the interaction page, even if the interaction entry control 503 is the interaction entry control corresponding to the non-predetermined type of the interaction page, the terminal device 110 may present an unread message reminder 509, the unread message reminder 507 and the unread message reminder 508 respectively in association with the interaction entry control 503, 504 and 506.

In some embodiments, when the page currently presented by the terminal device 110 is a content display page, and the content display page is presented with an unread message reminder, the terminal device 110 may switch from the content display page to the interaction information page corresponding to the second entry control in response to receiving a trigger operation on the second entry control or the unread message reminder associated with the second entry control. For example, taking the content display page 500E currently presented by the terminal device 110 as an example, the terminal device 110 may switch from the content display page 500E to present the likes and favorites page in response to receiving a trigger operation on the interaction entry control 504 or the unread message reminder 507. In some embodiments, in response to switching from the content display page 500E to present the likes and favorites page, the terminal device 110 ceases to present the unread message reminder 507 in association with the interaction entry control 504. In this case, if the user only views the interaction message in the likes and favorites page corresponding to the interaction entry control 504, the terminal device 110 still presents the unread message reminder 508 in association with the interaction entry control 506 in response to switching from the likes and favorites page back to present the content display page.

According to example embodiments of the present disclosure, different interaction entry controls associated with different interaction information pages may be presented in the content display page of the user, and the user may trigger different interaction entry controls to switch to the corresponding interaction information page according to needs, thereby improving the efficiency of viewing the interaction information and obtaining a better content browsing experience. In addition, when the first page other than the content display page is presented, the interaction message reminder may be presented to the user to prompt the user that there is an unread message, which may help the user to have a better interaction.

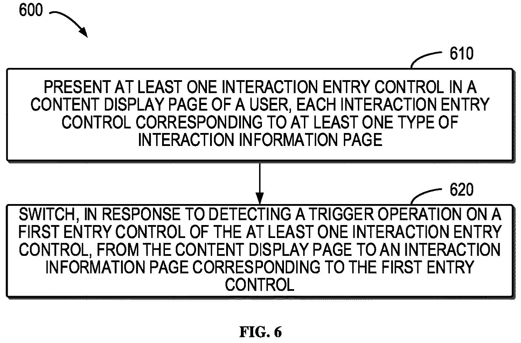

FIG. 6 illustrates a flowchart of a process 600 for content presenting according to some embodiments of the present disclosure. Process 600 may be implemented at the terminal device 110. The process 600 is described below with reference to FIG. 1.

At block 610, the terminal device 110 presents at least one interaction entry control in a content display page of a user, each interaction entry control corresponding to at least one type of interaction information page, the content display page being configured to at least display at least one of user information of the user and content posted by the user.

At block 620, the terminal device 110 switches, in response to detecting a trigger operation on a first entry control of the at least one interaction entry control, from the content display page to an interaction information page corresponding to the first entry control.

In some embodiments, the first entry control corresponds to a plurality of interaction information pages of different types, and wherein switching to the interaction information page includes: switching from the content display page to a default interaction information page of the plurality of interaction information pages.

In some embodiments, the process 600 further includes: presenting page entry controls respectively corresponding to the plurality of interaction information pages while presenting the default interaction information page.

In some embodiments, the interaction information page corresponding to the at least one interaction entry control includes at least one of: at least one interaction message page configured to present at least one type of interaction message for a work related to the user, or at least one user interaction page configured to present at least one type of interaction state for other users related to the user.

In some embodiments, the process 600 further includes: presenting an unread message reminder in association with a target page entry control in accordance with a determination that an unread message exists in the interaction information page corresponding to the at least one entry control, the target entry control corresponds to the content display page.

In some embodiments, presenting the unread message reminder includes:presenting the unread message reminder in a first style upon satisfying at least one of: a target application corresponding to the content display page being started at least once within a first time period, the unread message including an unread message in at least one predetermined type of interaction page, or no access request of the user for the content display page being received within a second time period after the unread message reminder is presented in a second style.

In some embodiments, the first style includes a bubble style, and presenting the unread message reminder in the first style includes: presenting respective type identifiers of at least one predetermined type and a number of unread messages in each predetermined type of interaction page.

In some embodiments, the first style includes a bubble style, and presenting the unread message reminder in the first style includes: presenting a predetermined interaction identifier and a total number of unread messages in the at least one predetermined type of interaction page.

In some embodiments, the second style includes a red dot reminder style, or a style including a red dot reminder and a number of unread messages, wherein the number of unread messages includes a total number of unread messages in the interaction information page corresponding to the at least one entry control or a total number of unread messages in the at least one predetermined type of interaction page.

In some embodiments, the process 600 further includes: switching a presentation style of the unread message reminder from the first style to a third style in response to a duration of presenting the unread message reminder in the first style reaching a predetermined duration.

In some embodiments, the process 600 further includes: presentating, after presenting the unread message reminder, at least one unread message reminder in association with at least one second entry control in response to the content display page being presented, an unread message existing respectively in an interaction information page corresponding to the at least one second entry control.

**In** some embodiments, the process 600 further includes: presenting the unread message reminder in a fourth style in response to determining that a number of times of presenting the unread message reminder in the first style within a third time period reaches a predetermined number of times.

**In** some embodiments, the process 600 further includes: switching, in accordance with the unread message reminder being presented in a first page other than the content display page, from the first page to the content display page in response to receiving a trigger operation on the target page entry control or the unread message reminder.

**In** some embodiments, the process 600 further includes ceasing presenting the unread message reminder in the first style.

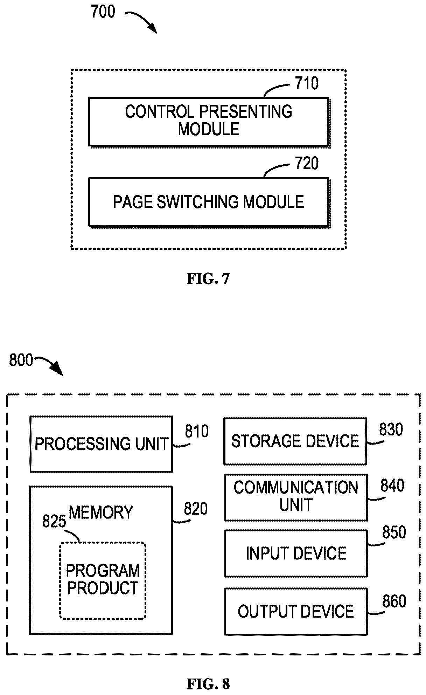

FIG. 7 illustrates a schematic structural block diagram of an apparatus 700 for content presenting according to some embodiments of the present disclosure. The apparatus 700 may be implemented or included in the terminal device 110. The various modules/components in the apparatus 700 may be implemented by hardware, software, firmware, or any combination thereof.

As shown, the apparatus 700 includes a control presenting module 710 configured to present at least one interaction entry control in a content display page of a user, each interaction entry control corresponding to at least one type of interaction information page, the content display page being configured to at least display at least one of user information of the user and content posted by the user. The apparatus 700 further includes a page switching module 720 configured to switch, in response to detecting a trigger operation on a first entry control of the at least one interaction entry control, from the content display page to an interaction information page corresponding to the first entry control.

In some embodiments, the first entry control corresponds to a plurality of interaction information pages of different types, and the page switching module 720 includes: a default page switching module configured to switch from the content display page to a default interaction information page of the plurality of interaction information pages.

In some embodiments, the apparatus 700 further includes: an entry control presentation module configured to present page entry controls respectively corresponding to the plurality of interaction information pages while presenting the default interaction information page.

In some embodiments, the interaction information page corresponding to the at least one interaction entry control includes at least one of: at least one interaction message page configured to present at least one type of interaction message for a work related to the user, or at least one user interaction page configured to present at least one type of interaction state for other users related to the user.

In some embodiments, the apparatus 700 further includes: a reminder presentation module configured to present an unread message reminder in association with a target page entry control in accordance with a determination that an unread message exists in the interaction information page corresponding to the at least one entry control, the target entry control corresponds to the content display page.

In some embodiments, the reminder presentation module is further configured to: present the unread message reminder includes:presenting the unread message reminder in a first style upon satisfying at least one of: a target application corresponding to the content display page being started at least once within a first time period, the unread message including an unread message in at least one predetermined type of interaction page, or no access request of the user for the content display page being received within a second time period after the unread message reminder is presented in a second style.

In some embodiments, the first style includes a bubble style, and the reminder presentation module includes a first presentation module configured to present respective type identifiers of at least one predetermined typ and a number of unread messages in each predetermined type of interaction page.

In some embodiments, the first style includes a bubble style, and the reminder presentation module includes a second presentation module configured to present a predetermined interaction identifier and a total number of unread messages in the at least one predetermined type of interaction page.

In some embodiments, the second style includes a red dot reminder style, or a style including a red dot reminder and a number of unread messages, wherein the number of unread messages includes a total number of unread messages in the interaction information page corresponding to the at least one entry control or a total number of unread messages in the at least one predetermined type of interaction page.

In some embodiments, the apparatus 700 further includes: a style switching module configured to switch a presentation style of the unread message reminder from the first style to a third style in response to a duration of presenting the unread message reminder in the first style reaching a predetermined duration.

In some embodiments, the apparatus 700 further includes: a second reminder presentation module, configured to, present, after presenting the unread message reminder, at least one unread message reminder in association with at least one second entry control in response to the content display page being presented, an unread message existing respectively in an interaction information page corresponding to the at least one second entry control.

In some embodiments, the apparatus 700 further includes: a third reminder presentation module configured to present the unread message reminder in a fourth style in response to determining that a number of times of presenting the unread message reminder in the first style within a third time period reaches a predetermined number of times.

In some embodiments, the apparatus 700 further includes: a switching module, configured to, switching, in accordance with the unread message reminder being presented in a first page other than the content display page, from the first page to the content display page in response to receiving a trigger operation on the target page entry control or the unread message reminder.

In some embodiments, the apparatus 700 further includes: a reminder ceasing module configured to cease presenting the unread message reminder in the first style.

FIG. 8 illustrates a block diagram illustrating an electronic device 800 in which one or more embodiments of the present disclosure may be implemented. It should be understood that the electronic device 800 illustrated in FIG. 8 is merely illustrative and should not constitute any limitation on the function and scope of the embodiments described herein. The electronic device 800 illustrated in FIG. 8 may be configured to implement the terminal device 110 in FIG. 1 or the apparatus 700 in FIG. 7.

As shown in FIG. 8, the electronic device 800 is in the form of a general-purpose electronic device. Components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and capable of performing various processes according to programs stored in the memory 820. In multiprocessor systems, multiple processing units execute computer-executable instructions in parallel to improve parallel processing capabilities of electronic device 800.

Electronic device 800 typically includes a plurality of computer storage media. Such media may be any available media accessible to the electronic device 800, including, but not limited to, volatile and non-volatile media, removable and non-removable media. The memory 820 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 830 may be a removable or non-removable medium and may include a machine-readable medium, such as a flash drive, magnetic disk, or any other medium, which may be capable of storing information and/or data (e.g., training data for training) and may be accessed within electronic device 800.

The electronic device 800 may further include additional removable/non-removable, volatile/non-volatile storage media. Although not shown in FIG. 8, a disk drive for reading or writing from a removable, non-volatile magnetic disk (e.g., a "floppy disk") and an optical disk drive for reading or writing from a removable, non-volatile optical disk may be provided. In these cases, each drive may be connected to a bus (not shown) by one or more data media interfaces. The memory 820 may include a computer program product 825 having one or more program modules configured to perform various methods or actions of various embodiments of the present disclosure.

The communication unit 840 implements communication with another electronic device through a communication medium. Additionally, the function of components of the electronic device 800 may be implemented in a single computing cluster or multiple computing machines capable of communicating over a communication connection. Thus, the electronic device 800 may operate in a networked environment using logical connections with one or more other servers, network personal computers (PCs), or another network node.

The input device 850 may be one or more input devices, such as a mouse, a keyboard, a trackball, or the like. The output device 860 may be one or more output devices, such as a display, a speaker, a printer, or the like. The electronic device 800 may also communicate with one or more external devices (not shown) through the communication unit 840 as needed, external devices such as storage devices, display devices, etc. , communicate with one or more devices that enable a user to interact with the electronic device 800, or communicate with any device (e.g., a network card, a modem, etc. ) that enables the electronic device 800 to communicate with one or more other electronic devices. Such communication may be performed via an input/output (I/O) interface (not shown).

According to example embodiments of the present disclosure, there is provided a computer-readable storage medium having computer-executable instructions stored thereon, wherein the computer-executable instructions are executed by a processor to implement the method described above. According to example embodiments of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that the flowchart and/or each block in the block diagrams, and combinations of the flowcharts and/or blocks of block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or one or more blocks in the block diagrams. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or one or more blocks in the block diagrams.

The computer-readable program instructions may be loaded onto a computer, other programmable data processing apparatus, or other device, such that a series of operational steps are performed on a computer, other programmable data processing apparatus, or other device to produce a computer-implemented process such that the instructions executed on a computer, other programmable data processing apparatus, or other device implement the functions/acts specified in the flowchart and/or one or more blocks in the block diagrams.

The flowchart and block diagrams in the figures show architecture, function, and operation possible implemented of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the function involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various embodiments disclosed herein.

## Claims

1. A method for content presenting, comprising:
presenting at least one interaction entry control in a content display page of a user, each interaction entry control corresponding to at least one type of interaction information page, the content display page being configured to at least display at least one of user information of the user and content posted by the user; and
switching, in response to detecting a trigger operation on a first entry control of the at least one interaction entry control, from the content display page to an interaction information page corresponding to the first entry control.

2. The method of claim 1, wherein the first entry control corresponds to a plurality of interaction information pages of different types, and wherein switching to the interaction information page comprises:
switching from the content display page to a default interaction information page of the plurality of interaction information pages.

3. The method of claim 2, further comprising:
presenting page entry controls respectively corresponding to the plurality of interaction information pages while presenting the default interaction information page.

4. The method of claim 1, wherein the interaction information page corresponding to the at least one interaction entry control comprises at least one of:
at least one interaction message page configured to present at least one type of interaction message for a work related to the user, or
at least one user interaction page configured to present at least one type of interaction state for other users related to the user.

5. The method of claim 1, further comprising:
presenting an unread message reminder in association with a target page entry control in accordance with a determination that an unread message exists in the interaction information page corresponding to the at least one entry control, the target entry control corresponds to the content display page.

6. The method of claim 5, wherein presenting the unread message reminder comprises:
presenting the unread message reminder in a first style upon satisfying at least one of:
a target application corresponding to the content display page being started at least once within a first time period,
the unread message comprising an unread message in at least one predetermined type of interaction page, or
no access request of the user for the content display page being received within a second time period after the unread message reminder is presented in a second style.

7. The method of claim 6, wherein the first style comprises a bubble style, and presenting the unread message reminder in the first style comprises:
presenting respective type identifiers of at least one predetermined type and a number of unread messages in each predetermined type of interaction page.

8. The method of claim 6, wherein the first style comprises a bubble style, and presenting the unread message reminder in the first style comprises:
presenting a predetermined interaction identifier and a total number of unread messages in the at least one predetermined type of interaction page.

9. The method of claim 6, wherein the second style comprises a red dot reminder style, or a style comprising a red dot reminder and a number of unread messages,
wherein the number of unread messages comprises a total number of unread messages in the interaction information page corresponding to the at least one entry control or a total number of unread messages in the at least one predetermined type of interaction page.

10. The method of claim 6, further comprising:
switching a presentation style of the unread message reminder from the first style to a third style in response to a duration of presenting the unread message reminder in the first style reaching a predetermined duration.

11. The method of claim 6, further comprising:
presenting, after presenting the unread message reminder, at least one unread message reminder in association with at least one second entry control in response to the content display page being presented, an unread message existing respectively in an interaction information page corresponding to the at least one second entry control.

12. The method of claim 6, further comprising:
presenting the unread message reminder in a fourth style in response to determining that a number of times of presenting the unread message reminder in the first style within a third time period reaches a predetermined number of times.

13. The method of claim 5, further comprising:
switching, in accordance with the unread message reminder being presented in a first page other than the content display page, from the first page to the content display page in response to receiving a trigger operation on the target page entry control or the unread message reminder.

14. The method of claim 13, further comprising:
ceasing presenting the unread message reminder in the first style.

15. An apparatus for content presenting, comprising:
a control presenting module configured to present at least one interaction entry control in a content display page of a user, each interaction entry control corresponding to at least one type of interaction information page, the content display page being configured to at least display at least one of user information of the user and content posted by the user; and
a page switching module configured to switch, in response to detecting a trigger operation on a first entry control of the at least one interaction entry control, from the content display page to an interaction information page corresponding to the first entry control.

16. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 14.

17. A computer-readable storage medium having stored thereon a computer program, the computer program, when executed by a processor, implementing the method of any of claims 1 to 14.
